(19) Europäisches Patentamt
European Patent Office
Office européen des brevets

(11) **EP 1 189 167 B1**

(12) **FASCICULE DE BREVET EUROPEEN**

(45) Date de publication et mention de la délivrance du brevet:
**14.01.2009 Bulletin 2009/03**

(51) Int Cl.:
***G06K 9/00*** *(2006.01)*    ***G06K 9/62*** *(2006.01)*

(21) Numéro de dépôt: **01402007.7**

(22) Date de dépôt: **25.07.2001**

(54) **Méthode pour faciliter la reconnaissance d'objets, notamment géologiques, par une technique d'analyse discriminante**

Verfahren zur Erleichterung von Objekten, insbesondere geologischen, mittels einer Diskriminantanalysetechnik

Method for easing the recognition of objects, in particular geological ones, with a technique of discriminant analysis

(84) Etats contractants désignés:
**DK GB IT NL**

(30) Priorité: **11.09.2000 FR 0011618**

(43) Date de publication de la demande:
**20.03.2002 Bulletin 2002/12**

(73) Titulaire: **Institut Français du Pétrole**
**92852 Rueil-Malmaison Cedex (FR)**

(72) Inventeurs:
• **Nivlet, Philippe**
**78290 Croissy (FR)**
• **Fournier, Frédérique**
**95240 Cormeilles en Parisis (FR)**
• **Royer, Jean-Jacques**
**54000 Nancy (FR)**

(56) Documents cités:
**EP-A- 0 903 592**

• **HAKIL KIM ET AL: "EVIDENTIAL REASONING APPROACH TO MULTISOURCE-DATA CLASSIFICATION INREMOTE SENSING" IEEE TRANSACTIONS ON SYSTEMS, MAN AND CYBERNETICS,US,IEEE INC. NEW YORK, vol. 25, no. 8, 1 août 1995 (1995-08-01), pages 1257-1265, XP000526380 ISSN: 0018-9472**
• **FOURNIER F: "INTEGRATION OF 3D SEISMIC DATA IN RESERVOIR STOCHASTIC SIMULATIONS:A CASE STUDY" SPE ANNUAL TECHNICAL CONFERENCE AND EXHIBITION, 1995, XP000997171**
• **FOURNIER F ET AL: "A STATISTICAL METHODOLOGY FOR DERIVING RESERVOIR PROPERTIES FROM SEISMIC DATA" GEOPHYSICS,US,SOCIETY OF EXPLORATION GEOPHYSICISTS. TULSA, vol. 60, no. 5, 1 septembre 1995 (1995-09-01), pages 1437-1450, XP002070858 ISSN: 0016-8033**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne une méthode pour faciliter la reconnaissance d'objets par une technique d'analyse discriminante.

La méthode selon l'invention trouve des applications dans de nombreux domaines. On peut l'utiliser par exemple pour reconnaître des objets géologiques constitutifs d'une formation souterraine, se distinguant par leur nature ou leur forme. Elle facilite par exemple la reconnaissance de réservoirs pétroliers par l'analyse du faciès des traces sismiques, par la caractérisation de types de roche, d'électrofaciès, par l'analyse des diagraphies, etc. Bien que la description qui va suivre s'inscrive dans ce cadre géologique, la méthode peut très bien s'appliquer dans d'autres domaines tels que le traitement d'image, le traitement du signal (télédétection, imagerie médicale, etc).

La plupart des puits d'exploration que l'on fore dans les formations souterraines ne sont pas carottés systématiquement, le coût d'un carottage étant très élevé, ainsi que les contraintes entraînées sur le déroulement du forage. Par exemple, dans le cas particulier de l'analyse des diagraphies, l'objectif de la méthode selon l'invention est de permettre de reconnaître la roche dans les niveaux qui ne sont pas carottés. Il s'agit d'un problème technique d'importance car on ne dispose généralement que de peu d'information directe sur la nature des roches. Par contre, les mesures diagraphiques sont systématiquement enregistrées, dès qu'un forage est effectué. On dispose donc d'une source abondante de données indirectes sur la nature des formations géologiques, qu'il est crucial d'exploiter pour en déduire les caractéristiques géologiques des terrains rencontrés dans le forage. Les mesures diagraphiques sont entachées d'erreurs, liées à la précision du système de mesure ainsi qu'à la qualité même de l'enregistrement. Ainsi, si la paroi du forage est endommagée, le couplage du système de mesure aux terrains se fera de façon défectueuse et la mesure sera moins fiable. Il est important d'intégrer la qualité de la mesure dans la détermination de la nature de la roche qui va être faite, afin de mieux évaluer la fiabilité de la base de données qui sera constituée suite à l'interprétation des diagraphies.

Un autre exemple est la reconnaissance des faciès sismiques au niveau d'un réservoir, par l'analyse des différents attributs sismiques enregistrés. C'est là encore un problème très important, car les mesures sismiques sont la seule source d'information dont on dispose, qui couvre la totalité du réservoir, contrairement aux mesures de puits qui sont ponctuelles et peu nombreuses.

**Etat de la technique**

Différents aspects de l'art antérieur dans le domaine considéré sont décrits par exemple dans les références suivantes :

- Alefeld G., and Herzberger J., 1983, Introduction to Interval Computations : Computer Science and Applied Mathematics n. 42, Academic Press, NewYork ;

- Dequirez P. Y., Fournier F., Feuchtwanger T., Torriero D., 1995, Integrated Stratigraphic and Lithologic Interpretation of The East-Senlac Heavy Oil-Pool ; SEG, 65th Annual International Society of Exploration Geophysicists Meeting, Houston, Oct. 8-13 1995, Expanded Abstracts, CH1.4, pp. 104-107

- Epanechnikov V. A., 1969, Nonparametric Estimate of a Multivariate Probability Density: Theor. Probab. Appl., vol. 14, p. 179-188 ;

- Hand D. J., 1981, Discrimination and Classification ; Wiley Series in Probabilities and Mathematical Statistics, John Wiley & Sons, Chichester.

- Jaulin L., 2000, Le Calcul Ensembliste par Analyse par Intervalles et Ses Applications ; Mémoire d'Habilitation à Diriger des Recherches.

- Kolmogorov A. N., 1950, Foundation of the Theory of Probability ; Chelsea Publ. Co., New York.

- Luenberger D. G., 1969, Optimization by Vector Space Methods, Series in Decision and Control, John Wiley & Sons, Chichester.

- Moore R. E., 1969, Interval Analysis: Prenctice-Hall, Englewood Cliffs ;

- Pavec R., 1995, Some Algorithms Providing Rigourous Bounds for the Eigenvalues of a Matrix : Journal of Universal Computer Science, vol. 1 n. 7. p. 548-559

- Walley P., 1991, Statistical Reasoning with Imprecise Probabilities: Monographs on Statistics and Applied Probabilities n. 42, Chapman and Hall, London.

L'analyse discriminante est une technique connue pour faire de la reconnaissance d'objets géologiques dans des formations souterraines, ces objets étant définis par un ensemble de données : un certain nombre p de variables ou caractéristiques. Par exemple, à partir d'un ensemble de mesures diagraphiques, on peut souhaiter prédire le type de roche ou de lithofacies que l'on va trouver pour chaque cote de profondeur d'un puits, en se référant à une base de connaissance. On forme ce type de base par apprentissage à partir de configurations connues par des observations ou mesures préalables faites par exemple sur des carottes prélevées à différents niveaux de profondeur de puits au travers de la formation permettant ainsi de mettre en relation des cotes de profondeur typiques et des lithofaciès ou types de roche, existant dans le puits. Une méthode d'analyse de ce type est décrite dans le brevet FR 2 768 818 (US 6 052 651) du demandeur.

Un autre exemple est donné par la méthodologie d'analyse supervisée du faciès sismique décrite par exemple par Dequirez *et al.*, 1995, précitée. On caractérise des portions de traces sismiques, ou des échantillons sismiques, par un ensemble de paramètres appelés des attributs sismiques, et l'on se sert de ces attributs pour classer des traces dans des catégories qui ont un sens géologique. Au préalable, on aura réalisé un apprentissage sur des traces sismiques typiques obtenues au voisinage de puits représentatifs des catégories géologiques que l'on cherche à reconnaître, à partir de la sismique, par exemple, des puits produisant du gaz par rapport à des puits produisant de l'huile, ou des puits où le réservoir est poreux par rapport à des puits où le réservoir est compact, ou bien encore des puits où le réservoir est à dominante sableuse, par rapport à des puits où le réservoir est à dominante silteuse, etc.

L'art antérieur est aussi décrite par:

H. Kim and P.H. Swain - Evidential reasoning approach to multisource-data classification in remote sensing, IEEE Transactions on Systems, Man and Cybernetics, 25(8), August 1995, pp. 1257 - 1265.

F. Fournier - Integration of 3D seismic data in reservoir stochastic simulations: A case study, SPE Annual technical conference and exhibition, 1995.

F. Fournier and J. F. Derain - A statistical methodology for deriving reservoir properties from seismic data, Geophysics, vol. 60, no. 5, September-October 1995, pp. 1437-1450.

La technique d'analyse discriminante présente certaines limites. En particulier, elle ne permet pas de prendre en compte des incertitudes sur les valeurs des p variables qui sont utilisées pour classer les objets. C'est une lacune car ces incertitudes sont réelles. Les mesures, qu'elles soient diagraphiques ou sismiques, sont imprécises. Une des causes d'imprécision tient aux outils utilisés pour obtenir et traiter les mesures ; une autre tient aux conditions expérimentales. Des écarts de mesure importants peuvent être notés par exemple si la sonde de diagraphie se trouve en face d'une paroi du puits endommagée ou d'une formation envahie, etc.

**La méthode selon l'invention**

La méthode selon l'invention a pour objet de faciliter la reconnaissance d'objets en tenant compte des incertitudes sur un certain nombre p de paramètres descriptifs de ces objets, dans laquelle on utilise une technique d'analyse discriminante pour classer les objets dans des catégories définies. Elle comporte :

- la formation d'une base d'apprentissage regroupant des objets déjà reconnus et classés en catégories prédéfinies, chacune d'elles étant définie par des variables de caractéristiques statistiques connues ;

- la construction, par référence à la base d'apprentissage, d'une fonction de classement par une technique d'analyse discriminante, permettant de répartir dans les dites catégories, les différents objets à classer à partir de mesures disponibles sur les paramètres, cette fonction étant formée en déterminant les intervalles de probabilités d'appartenance des objets aux différentes catégories en tenant compte d'incertitudes sur les paramètres, sous la forme d'intervalles de largeur variable ; et

- l'affectation de chaque objet à au moins une des catégories prédéfinies si possible, en fonction de l'importance des intervalles de probabilité et de leur recouvrement.

Suivant un premier mode de mise en oeuvre, on construit la fonction de classement par une technique d'analyse discriminante paramétrique où les paramètres suivent une loi de probabilité multi-gaussienne.

Suivant un second mode de mise en oeuvre, on construit la fonction de classement par une technique d'analyse discriminante non paramétrique où les paramètres suivent une loi expérimentale estimée par exemple par une technique de noyaux.

Dans une première application à la géologie où l'on considère des objets géologiques dans une zone souterraine, on forme la base d'apprentissage à partir de carottes géologiques prélevées dans au moins un puits foré au travers de la formation, en définissant à partir d'elles des classes d'apprentissage correspondant à différentes natures de roche, les différents objets géologiques à classer étant associés à des mesures diagraphiques obtenues dans différents puits au travers de la formation, et, pour différentes cotes de profondeur, on évalue la probabilité d'appartenance des objets rencontrés à chacune de ces cotes à chacune des classes d'apprentissage définies, sous la forme d'un intervalle dont les bornes dépendent des dites mesures diagraphiques à la cote considérée et des incertitudes sur ces mêmes mesures, et l'on attribue si possible l'objet géologique rencontré à cette cote à au moins une des classes d'apprentissage en fonction de l'importance relative des différents intervalles de probabilité et de leur recouvrement.

Dans le cas où l'on dispose sur la formation souterraine d'un jeu de traces sismiques obtenues par exploration sismique, on forme la base d'apprentissage à partir d'un premier d'un premier ensemble de traces sismiques prélevées dans le voisinage d'au moins un puits foré au travers de la formation caractérisée par des mesures, et correspondant typiquement à différentes natures de réservoirs, et on évalue la probabilité d'appartenance à chacune des classes d'apprentissage définies, des traces sismiques d'un deuxième ensemble obtenues ailleurs qu'au voisinage du ou de chaque puits, sous la forme d'un intervalle dont les bornes dépendent des caractéristiques des mesures des traces sismiques des deux ensembles et des incertitudes sur ces mesures, et l'on attribue l'objet géologique rencontré à au moins une des classes d'apprentissage en fonction de l'importance relative de l'intervalle associé par rapport à l'ensemble des intervalles.

La méthode peut bien entendu être appliquée dans d'autres domaines tels que la reconnaissance des formes en traitement d'image, traitement du signal (imagerie médicale, en télédétection, etc).

La méthode selon l'invention, par la prise en compte de la qualité des mesures disponibles, aboutit à une meilleure évaluation de la fiabilité de la reconnaissance des objets à partir de ces mesures, ainsi qu'à un classement plus réaliste puisque les incertitudes de mesure sont intégrées dans le processus.

## Présentation succincte des figures

D'autres caractéristiques et avantages de la méthode selon l'invention, apparaîtront à la lecture de la description ci-après d'un exemple non limitatif de réalisation, en se référant aux dessins annexés où :

- la Fig.1 montre des exemples de logs disponibles au puits étudié obtenus par une sonde spectrale à rayons gamma, par une sonde de mesure de densité et par une sonde à neutrons(porosité) et les incertitudes attachées à ces mesures, ainsi que les cotes d'apprentissage ;

- la Fig.2 montre un exemple de diagramme croisé « densité » par rapport à « porosité-neutron » représentant l'ensemble d'apprentissage et les points à classer ;

- la Fig.3 montre des exemples d'intervalles de probabilité d'appartenance à chaque catégorie ; et

- les Fig.4a, 4b montrent des attributions possibles des points le long d'un puits aux différentes classes géologiques (Fig.4a), et les attributions les plus probables (Fig.4b).

## I) Description détaillée

Dans ses grandes lignes, la méthode selon l'invention comporte la construction d'une fonction qui permet de classer des objets dans des catégories prédéfinies. Cette fonction s'élabore à partir des caractéristiques statistiques des variables décrivant des objets déjà reconnus (c'est-à-dire pour lesquels la catégorie d'appartenance est connue), qui forment un ensemble d'apprentissage. La fonction de classement ainsi construite est basée sur le calcul des probabilités d'appartenance des objets aux différentes classes, compte tenu des mesures de p variables disponibles sur ces objets. On peut par exemple décider d'affecter l'objet à la catégorie pour laquelle sa probabilité d'appartenance est la plus probable. Dans la méthode proposée, les incertitudes sur les paramètres sont prises en compte sous la forme d'un intervalle de variation possible de la mesure de chaque variable sur un certain objet. La méthode selon l'invention permet de propager ces intervalles possibles, pour les valeurs des différentes mesures, dans le calcul des probabilités de classement. Pour chaque catégorie considérée, on obtient alors, non pas une probabilité de classement de l'objet dans celle-ci, mais un intervalle de probabilité. L'objet peut alors être attribué dès qu'un de ces intervalles de probabilité dépasse les autres. L'analyse de ces intervalles de probabilité permet aussi d'évaluer la qualité de la prédiction des catégories d'apprentissage, ainsi que le degré de séparation de ces catégories apporté par les p variables, tout en intégrant l'incertitude sur les mesures expérimentales de ces variables.

La méthode selon l'invention repose sur une application particulière du concept d'arithmétique d'intervalles qui va être décrit ci-après à titre de rappel, pour faciliter la compréhension.

L'arithmétique d'intervalles, comme décrit en détail dans le document précité : Moore R.E. 1969, permet d'étendre les opérateurs mathématiques habituels aux calculs sur des intervalles. L'objectif en est de fournir un encadrement garanti des résultats compte tenu des intervalles d'entrée. Ainsi, les règles (1) ci-après définissent l'extension des opérations arithmétiques à deux intervalles $x=[X^- ;X^+]$ et $y=[y^- :y^+]$.

$$\begin{cases} x+y = \left[x^- + y^- ; x^+ + y^+\right] \\ x-y = \left[x^- - y^+ ; x^+ - y^-\right] \\ x.y = \left[\text{Min}\left\{x^-.y^- ; x^-.y^+ ; x^+.y^- ; x^+.y^+\right\} ; \text{Max}\left\{x^-.y^- ; x^-.y^+ ; x^+.y^- ; x^+.y^+\right\}\right] \\ \dfrac{1}{x} = \left[\dfrac{1}{x^+} ; \dfrac{1}{x^-}\right] \\ \dfrac{x}{y} = x.\dfrac{1}{y} \end{cases}$$

(1)

Pour une fonction quelconque f, l'équation (2) définit son extension aux intervalles, appelée fonction d'inclusion $f_{[]}$.

$$f_{[\,]}(x) \supseteq \left\{y = f(x) \mid x \in x\right\}$$

(2)

Obtenir ces fonctions d'inclusion ne pose généralement pas de problème. Parmi celles-ci, la fonction d'inclusion naturelle est construite en utilisant uniquement les règles de calcul (1) et quelques définitions complémentaires concernant les fonctions élémentaires. Par exemple, l'équation (3) définit l'extension de l'exponentielle :

$$exp_{[\,]}(x) = \left[\exp(x^-) ; \exp(x^+)\right]$$

(3)

Néanmoins, les fonctions d'inclusion naturelle ne sont généralement pas optimales, dans le sens où l'inclusion (2) n'est pas une égalité. L'objectif de l'arithmétique d'intervalles est alors de générer une fonction d'inclusion dont les bornes soient restreintes autant que possible.

Pour compléter ces définitions de base, on définit une extension des opérateurs de comparaison aux intervalles [équation (4)].

$$x > y \Leftrightarrow x^- > y^+$$

(4)

Il est à noter que cette dernière définition permet de comparer des intervalles disjoints. Des intervalles se chevauchant sont dits indissociables.

L'ensemble des concepts de l'arithmétique d'intervalles sont appliqués dans la méthode selon l'invention pour encadrer des objets probabilistes. Or, des intervalles de probabilité ne peuvent vérifier strictement les axiomes dits de Kolmogorov et définissant une probabilité et publiés dans la référence précitée de Kolmogorov, 1950. Il est donc nécessaire de généraliser la théorie des probabilités aux intervalles. Cette généralisation est exposée par Walley dans la publication précitée, sous le nom de théorie des probabilités imprécises. On rappelle ci-après les deux axiomes principaux que doit vérifier une probabilité imprécise $p_{[]}$.

- $P_{[]}$ est une mesure définie positive ; c'est-à-dire que pour tout événement A,

$$0 \le p_{[\,]}^{-}(A) \le p_{[\,]}^{+}(A) \le 1 \; ; \tag{5}$$

- $P_{[]}$ vérifie un axiome de cohérence ; c'est-à-dire que pour tout ensemble d'événements indépendants $A_i$, il existe une fonction p définie sur cet ensemble d'événements, vérifiant les axiomes de Kolmogorov, et telle que pour tous les $A_i$,

$$p_{[\,]}^{-}(A_i) \le p(A_i) \le p_{[\,]}^{+}(A_i). \tag{6}$$

La méthode de reconnaissance d'objets qui va être décrite ci-après s'apparente dans ses grandes lignes, avec un algorithme d'analyse discriminante.

Dans ce qui suit, on note $C_i$ l'une des N catégories pré-définies. Le $j^{\text{ème}}$ intervalle d'apprentissage de la classe $C_i$, constitué d'un vecteur de p intervalles de mesures, est noté $x_{ij}=(x_{ij}^{(1)}; ...; x_{ij}^{(k)}; ...; x_{ij}^{(p)})$. L'intervalle courant de l'espace attribut est noté $x=(x^{(1)}; ...; x^{(k)};...; x^{(p)})$. Enfin, $x^c$ désigne le centre d'un intervalle $x$ quelconque.

Les étapes de l'algorithme de reconnaissance d'objets sont :

**1- Calcul des densités de probabilité *conditionnelles* $p_{[]}(x \mid Ci)$**

L'estimation de la densité de probabilité peut se faire en utilisant soit une méthode non paramétrique, soit une méthode paramétrique. Dans le premier cas, l'avantage de la méthode est de permettre une meilleure identification de la structure de chaque classe d'apprentissage $C_i$. Néanmoins, son emploi requiert que la taille de la classe d'apprentissage $C_i$ soit suffisante pour permettre une identification fiable de cette structure. Dans le cas contraire, il est nécessaire de faire une hypothèse sur la structure de la classe d'apprentissage $C_i$. Cela revient à supposer que cette classe suit une loi de distribution prédéfinie, par exemple gaussienne [Equation (7)] :

$$p(x / C_i) = \frac{1}{(2\pi)^{P/2}|\Sigma|^{1/2}} e^{-\frac{1}{2}(x-\mu)^t \Sigma^{-1}(x-\mu)} \tag{7}$$

où $\mu$ désigne le centre d'inertie de la classe d'apprentissage $C_i$, et $\Sigma$, sa matrice de variance-covariance, caractéristique de sa dispersion.

Nous décrivons successivement les extensions de la méthode non paramétrique pour estimer la densité de probabilité, puis de la méthode paramétrique gaussienne [Equation (7)].

1-a. <u>Méthode non paramétrique</u>

Dans la méthode non paramétrique, non estimons la densité conditionnelle, par exemple par la méthode des noyaux. Il s'agit alors d'appliquer aux intervalles, la formule de calcul de la fonction de densité de probabilité conditionnelle par la méthode des noyaux d'Epanechnikov décrite dans la référence précitée :

$$p_{[\,]}(x \mid C_i) = \frac{1}{n_i h^P} \sum_{j=1}^{n_i} K_{[\,]}\left(\frac{x - x_{ij}}{h}\right), \tag{8}$$

où h désigne la largeur de la bande passante du noyau, $n_i$ la taille de la classe d'apprentissage $C_i$. Le noyau s'écrit :

$$K_{[\ ]}\left(\frac{x-x_{ij}}{h}\right) = \begin{cases} \dfrac{1}{2N_p}(p+2)\left(1-\dfrac{\sum\limits_{k=1}^{p}\left(x^{(k)}-x_{ij}^{(k)}\right)^2}{h^2}\right) & \text{si } \left|x-x_{ij}\right| < h \\ 0 \text{ autrement} \end{cases} \tag{9}$$

Chaque terme quadratique de la somme est indépendant des autres. On donne ici l'expression des bornes inférieure et supérieure de ces termes $Q=(x^{(k)}-x^{(k)}_{ij})/h^2$.

$$\begin{cases} Q^- = \begin{cases} \dfrac{\left(x^{c(k)}-x_{ij}^{(k)-}\right)^2}{h^2} & \text{si } x_{ij}^{(k)c} \leq x^{(k)c} \leq x_{ij}^{(k)-} - \left(x^{(k)c}-x^{(k)-}\right)+h \\ \dfrac{\left(x^{c(k)}-x_{ij}^{(k)+}\right)^2}{h^2} & \text{si } x_{ij}^{(k)+} - \left(x^{(k)+}-x^{(k)c}\right)-h \leq x^{(k)c} \leq x_{ij}^{(k)c} \\ 1 \text{ autrement} \end{cases} \\ \\ Q^+ = \begin{cases} \dfrac{\left(x_{ij}^{(k)-}-x^{(k)-}\right)^2}{h^2} & \text{si } x_{ij}^{(k)-} - \left(x^{(k)c}-x^{(k)-}\right)-h \leq x^{(k)c} \leq x_{ij}^{(k)-} - \left(x^{(k)c}-x^{(k)-}\right) \\ 0 \text{ si } x_{ij}^{(k)-} - \left(x^{(k)c}-x^{(k)-}\right) \leq x^{(k)c} \leq x_{ij}^{(k)+} + \left(x^{(k)+}-x^{(k)c}\right) \\ \dfrac{\left(x^{(k)+}-x_{ij}^{(k)+}\right)^2}{h^2} & \text{si } x_{ij}^{(k)+} + \left(x^{(k)+}-x^{(k)c}\right) \leq x^{(k)c} \leq x_{ij}^{(k)+} - \left(x^{(k)+}-x^{(k)c}\right)+h \\ 1 \text{ autrement} \end{cases} \end{cases} \tag{10}$$

On ferait un calcul équivalent si on utilisait un autre estimateur non paramétrique de la densité conditionnelle, comme l'estimateur des k plus proches voisins.

1-b. Méthode paramétrique

L'extension de l'équation (7) peut se faire théoriquement à l'aide des règles de calcul (1), mais leur utilisation directe conduit à surestimer les intervalles de variation des densités de probabilités de l'équation (11).

$$p_{[\ ]}\left(x_{[\ ]}/C_i\right) = \frac{1}{(2\pi)^{P/2}\left|\Sigma_{[\ ]}\right|^{1/2}} e^{-\frac{1}{2}\left(x_{[\ ]}-\mu_{[\ ]}\right)^t \Sigma_{[\ ]}^{-1}\left(x_{[\ ]}-\mu_{[\ ]}\right)} \tag{11}$$

L'algorithme de calcul proposé ici améliore l'encadrement que pourrait obtenir l'application des règles de calcul (1). Les différentes étapes en sont :

- *Calcul des intervalles de variations des paramètres $\mu$ et $\Sigma$ de la loi gaussienne (11)*

Ce calcul consiste à trouver le minimum et le maximum de chaque terme de la matrice $\Sigma$ quand les points $x_{ij}$ de la classe d'apprentissage $C_i$ varient dans leur intervalles de valeurs possibles $x_{ij}$. Il s'effectue en utilisant une méthode d'optimisation sous contrainte, comme la méthode du gradient projeté.

$$\begin{cases} \Sigma_{kl}^{-} = \min_{x_{ij} \in x_{ij}, \forall j} \left\{ \sum_{j} \left( x_{ij}^{(k)} - \mu_{i}^{(k)} \right) \left( x_{ij}^{(l)} - \mu_{i}^{(l)} \right) \right\} \\ \Sigma_{kl}^{+} = \max_{x_{ij} \in x_{ij}, \forall j} \left\{ \sum_{j} \left( x_{ij}^{(k)} - \mu_{i}^{(k)} \right) \left( x_{ij}^{(l)} - \mu_{i}^{(l)} \right) \right\} \end{cases} \forall (k,l) = 1 ... p \qquad (12)$$

*- Diagonalisation de la matrice par intervalles $\Sigma_{[\,]}$*

Cette étape consiste à encadrer la matrice par intervalles $\Sigma_{[\,]}$ par une matrice $\Sigma^*_{[\,]}$ qui lui est similaire, mais qui soit diagonale. En d'autres termes, il faut que $\Sigma^*_{[\,]}$ vérifie l'équation (13):

$$\Sigma_{[\,]}^{*} \supseteq R_{\theta}^{t} \Sigma_{[\,]} R_{\theta} \qquad (13)$$

où $R_{\theta}$ est une matrice de rotation.

Dans un premier temps, nous modifions la matrice $\Sigma_{[\,]}$ en cherchant à la transformer en une matrice

$\Sigma'_{[\,]} = R_{\theta}^{t} \Sigma_{[\,]} R_{\theta}$ dont les termes hors diagonale varient dans des intervalles aussi petits que possible. Pour cela, la méthode de Jacobi-intervalles est utilisée. Dans un second temps, nous remplaçons les intervalles hors de la diagonale de $\Sigma'_{[\,]}$ par 0. Cette opération conduit nécessairement à une augmentation de la taille des intervalles de variation des termes diagonaux de $\Sigma'_{[\,]}$.

En résumé, à l'issue de cette seconde étape, nous avons trouvé un encadrement de la matrice $\Sigma_{[\,]}$ sous la forme d'une matrice $\Sigma^*_{[\,]}$, et nous nous sommes donc affranchis des problèmes de répétition d'intervalles. Néanmoins, l'utilisation directe de la matrice $\Sigma^*_{[\,]}$ dans l'équation (11) conduit encore à surestimer les intervalles variation des densités de probabilité conditionnelles.

*- Optimisation des intervalles de variation des densités de probabilité conditionnelles*

Pour mieux encadrer l'intervalle de variations des densités de probabilité conditionnelles, nous divisons le domaine de variation de $\mu$, en $n_s$ sous-domaines $\mu_{k[\,]}$ de façon régulière. Sur chaque sous-pavé $\mu_{k[\,]}$ ainsi formé, nous appliquons les règles de l'arithmétique d'intervalle (1). Cette opération fournit une fonction par intervalles $p_{k[\,]}(x/Ci)$. Après avoir formé les $n_s$ fonctions par intervalles, nous calculons la fonction $p_{[\,]}(x/Ci)$, réunion de toutes les fonctions par intervalles $p_{k[\,]}(x_{[\,]}/Ci)$ précédemment formées :

$$p_{[\,]}(x/C_i) = \bigcup_{k} p_{k[\,]}(x/C_i) \qquad (14)$$

La fonction $p_{[\,]}(x_{[\,]}/C_i)$ ainsi calculée est un encadrement garanti des intervalles de variation de la densité de probabilité conditionnelle, mais dont les bornes sont meilleures que si le sous-pavage n'avait pas été effectué.
Après avoir calculé les intervalles de variation des densités de probabilité conditionnelles, nous calculons les probabilités a *posteriori* $p_{[\,]}(C_i \mid x)$.

## 2 - Calcul des probabilités a posteriori $p_{[\,]}(C_i|x)$

Par cette étape, on applique aux intervalles la règle de Bayes bien connue en statistiques :

$$p_{[\ ]}(C_i \mid x) = \frac{p(x \mid C_i)p(C_i)}{\sum_{l=1}^{p} p(x \mid C_l)p(C_l)}_{[\ ]} \qquad (15)$$

En transformant l'équation précédente et en appliquant les règles (1), on obtient l'expression optimale ci-après des probabilités *a posteriori* :

$$p_{[\ ]}(C_i \mid x) = \left[ \left( 1 + \sum_{l \neq i} \frac{p^+(x \mid C_i)p^+(C_i)}{p^-(x \mid C_l)p^-(C_l)} \right)^{-1} ; \left( 1 + \sum_{l \neq i} \frac{p^-(x \mid C_i)p^-(C_i)}{p^+(x \mid C_l)p^+(C_l)} \right)^{-1} \right] \qquad (16)$$

Ces probabilités par intervalles vérifient les axiomes des probabilités imprécises.

**3- Classement de l'intervalle *x* dans la ou les classes les plus vraisemblables.**

Le mode de classement que l'on utilise est une extension de la règle du maximum de vraisemblance. Ceci consiste à comparer les différents intervalles de probabilité *a posteriori* $p_{[]}(C_i|x)$. On ordonne donc dans un premier temps les différents intervalles par ordre décroissant de $p^+(C_i|x)$, ou ce qui est équivalent, par ordre décroissant des quantités $p+(x|C_i)p^+(C_i)$ :

$$p^+(x \mid C_{i1})p^+(C_{i1}) \geq p^+(x \mid C_{i2})p^+(C_{i2}) \geq ... \geq p^+(x \mid C_{iN})p^+(C_{iN}) \qquad (17)$$

Alors, par application de la règle de comparaison sur les intervalles, il vient que si les intervalles $P_{[]}(C_{i1} \mid x)$ et $p_{[]}(C_{i2} \mid x)$ sont disjoints ($p^-(C_{i1} \mid x) \geq p^+(C_{i2} \mid x)$), l'intervalle **x** est attribué à la classe $C_{i1}$. Dans le cas contraire, l'algorithme ne peut distinguer les classes $C_{i1}$ et $C_{i2}$ en **x**. Le test de comparaison précédent est alors répété entre les classes $C_{i1}$ et $C_{i3}$, ..., $C_{i1}$ jusqu'à ce que les intervalles $p_{[]}(x \mid C_{i1}).P_{[]}(C_{i1})$ et $p_{[]}(x \mid C_{i1}).p_{[]}(C_{i1})$ soient disjoints.
En conclusion, l'algorithme présenté permet de propager les incertitudes de mesures dans le cadre de l'analyse discriminante. Le résultat en est un classement flou des observations.

**II) Validation de la méthode : étude de cas**

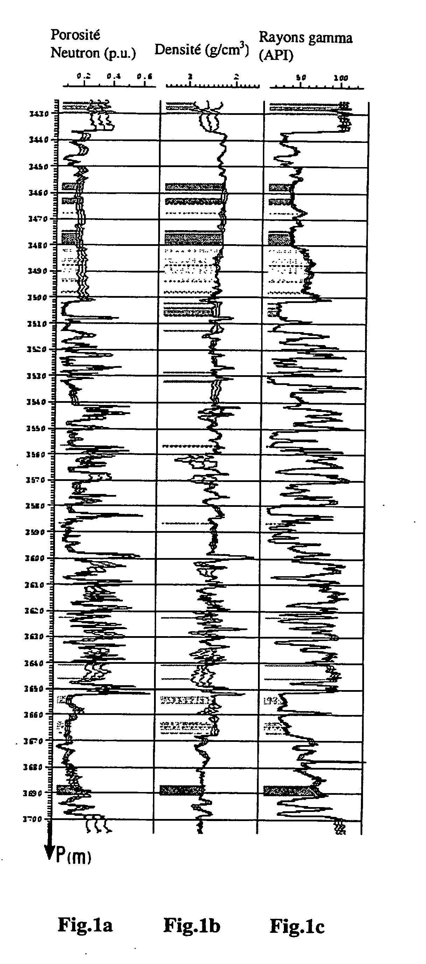

La méthode selon l'invention a été appliquée à des enregistrements diagraphiques dans des puits pour déterminer des types de roches tels que ceux montrés aux figures 1 à 4.
La figure 1 représente les logs disponibles au puits de référence sur lequel des échantillons d'apprentissage ont été définis à partir du calage de la réponse diagraphique sur une description de carottes. Trois diagraphies sont disponibles obtenues par une sonde spectrale à rayons gamma, par une sonde de mesure de densité et par une sonde à neutrons (porosité). Chaque courbe est affichée avec son incertitude, cette incertitude étant liée, d'une part à la nature même du dispositif d'acquisition, d'autre part à la qualité de la paroi du forage.

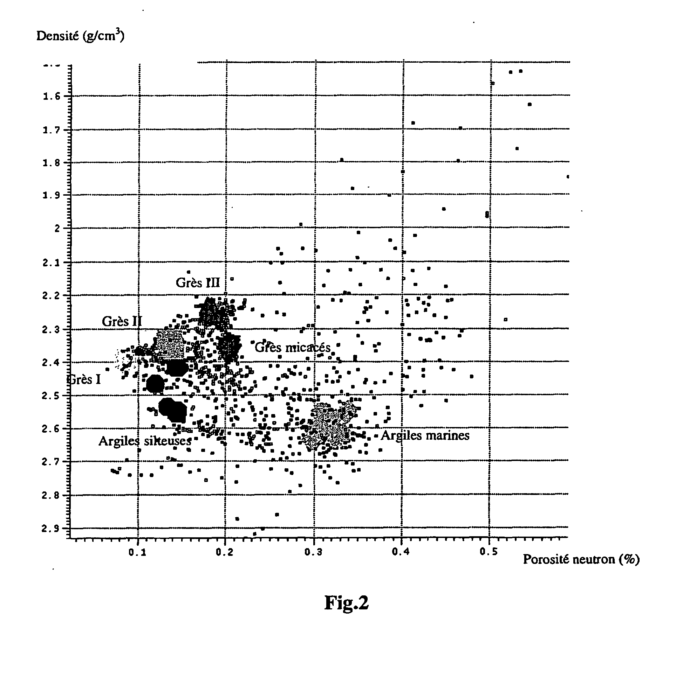

La figure 2 représente, avec différents symboles, les points d'apprentissage des différentes catégories lithologiques que l'on cherche à reconnaître à partir des mesures diagraphiques, dans un diagramme croisé "densité" par rapport à "porosité-neutron". Les zones de ce diagramme se traduisent en termes de minéralogie et de porosité. On constate ainsi que l'ensemble d'apprentissage se compose de trois catégories de grès, en fonction de leur porosité, d'une catégorie de grès micacés et de deux catégories d'argiles (argiles marines et argiles silteuses). Les symboles plus petits correspondent à des cotes profondeur n'appartenant pas à l'ensemble d'apprentissage, c'est-à-dire des cotes pour lesquelles l'appartenance à la catégorie n'est pas connue, mais que l'on souhaiterait prédire à partir des mesures diagraphiques.

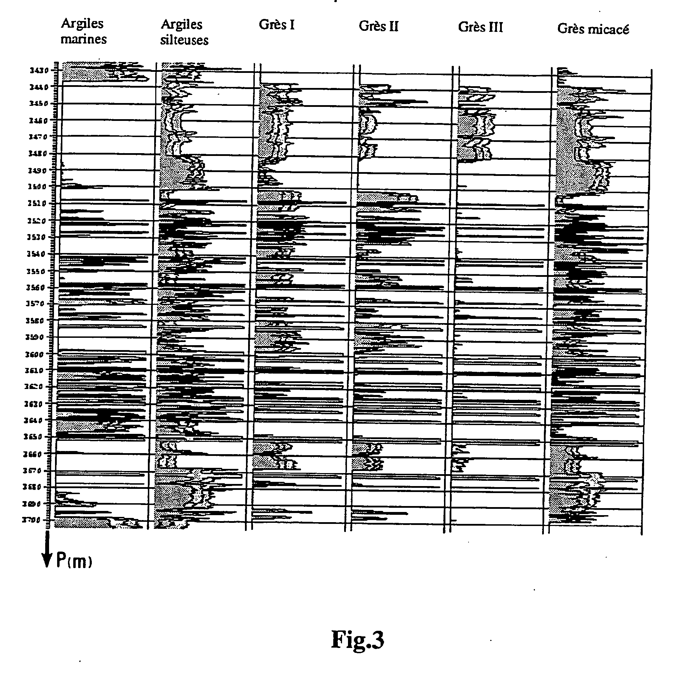

La figure 3 représente, le long du puits et ce pour les six catégories considérées, l'intervalle de probabilité d'appartenance à chaque catégorie calculé par la méthode selon l'invention à partir des trois logs disponibles et de leurs incertitudes.

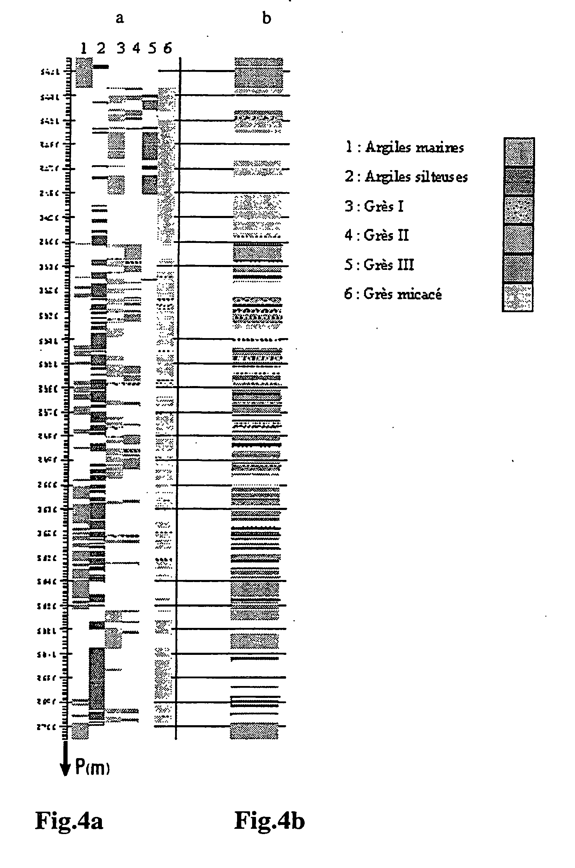

La figure 4 représente, le long du puits, les attributions possibles aux différentes classes géologiques, à partir des intervalles de probabilité calculés par la méthode selon l'invention, et représentés sur la figure 3. La colonne géologique la plus à droite est une synthèse de ces attributions possibles où n'apparaissent que les attributions les plus fiables.

La phase d'apprentissage s'effectue en utilisant des cotes profondeur pour lesquelles la nature de la roche est connue grâce à des carottes. Sur le réservoir étudié, on dispose d'une vingtaine de puits pour lesquels les enregistrements gamma-ray, densité et porosité-neutron ont été effectués. Un seul puits est carotté, qui sera donc utilisé comme puits de calibrage, ou puits de référence, pour choisir les cotes profondeur d'apprentissage qui permettront l'étalonnage de la fonction de classement.

Les six classes d'apprentissage correspondant à différentes natures de roche (à la fois nature lithologique et caractéristiques pétrophysiques) sont assez bien discriminées dans l'espace des trois paramètres considérés, comme le montre partiellement le plan densité, porosité-neutron. On dispose de suffisamment de points d'apprentissage par classe (environ 60) pour envisager d'utiliser une technique d'analyse discriminante non paramétrique pour construire la fonction de classement. Pour prendre en compte dans le classement les incertitudes sur les mesures diagraphiques, on exploite l'algorithme par arithmétique d'intervalle qui a été développé. Pour une cote profondeur donnée, décrite par les mesures diagraphiques floues, on évalue la probabilité d'appartenance à chacune des classes d'apprentissage. Cette probabilité est évaluée sous forme d'un intervalle, défini par une borne inférieure et une borne supérieure. La probabilité d'appartenance à la classe considérée calculée par analyse discriminante conventionnelle est représentée sur la figure 3 ainsi que son encadrement par les deux bornes déduites de l'arithmétique d'intervalle. Ces bornes prennent en compte, d'une part les valeurs diagraphiques à la cote considérée, d'autre part les incertitudes sur les mesures diagraphiques à cette même cote. Lorsqu'un des intervalles de probabilité dépasse entièrement ceux des autres classes, il est alors possible d'attribuer le point à la classe de l'intervalle de probabilité le plus fort. Sinon, quand k intervalles de probabilité se chevauchent, il a k attributions possibles du point. La mutiplicité des attributions possibles est provoquée par les incertitudes sur les mesures diagraphiques utilisées pour déterminer la classe géologique du point. Les différentes attributions possibles de chaque cote profondeur sont représentées le long du puits sur la figure 4. Les zones les plus fiables pour la prédiction sont celles où une seule, voire deux, attributions sont envisageables. Les zones où de multiples attributions existent sont des zones pour lesquelles les mesures diagraphiques, compte tenu de leurs erreurs, ne permettent pas de déterminer la classe géologique d'appartenance.

La méthode proposée permet donc de prédire l'appartenance à des catégories prédéfinies, ayant souvent une signification géologique, de façon plus réaliste puisque les erreurs ou les incertitudes sur les paramètres discriminants sont prises en compte dans le processus d'attribution. Cette méthode aboutit ainsi à une attribution plus fiable d'objets dans des classes d'apprentissage, accompagnée d'une quantification plus exacte des incertitudes attachées à cette prévision.

## Revendications

1. Méthode de reconnaissance d'un réservoir pétrolier par reconnaissance d'objets géologiques au sein dudit réservoir, lesdits objets étant décrits par un ensemble de p paramètres, dans laquelle on utilise une technique d'analyse discriminante pour classer lesdits objets dans des catégories définies, **caractérisée en ce qu'**elle comporte les étapes suivantes :

    - on définit lesdites catégories par des variables de caractéristiques statistiques connues, à partir de données obtenues par des mesures au sein dudit réservoir ;
    - on forme une base d'apprentissage comprenant des objets pour lesquels la catégorie est connue à partir desdites données ;
    - on construit, à partir des objets et des catégories définies dans ladite base d'apprentissage, une fonction permettant de classer lesdits objets dans lesdites catégories, au moyen d'une technique d'analyse discriminante dans laquelle on détermine des intervalles de probabilité d'appartenance desdits objets aux différentes catégories, en tenant compte d'incertitudes sur lesdits paramètres sous la forme d'intervalles de largeur variable ; et
    - on évalue lesdits intervalles de probabilité desdits objets, et
    - on affecte lesdits objets à au moins une desdites catégories en fonction de l'importance desdits intervalles de probabilité, et de leur recouvrement.

2. Méthode selon la revendication 1, **caractérisée en ce que** l'on construit la dite fonction de classement par une technique d'analyse discriminante paramétrique où les paramètres suivent une loi de probabilité multi-gaussienne par intervalles.

**3.** Méthode selon la revendication 1, **caractérisée en ce que** l'on construit la dite fonction de classement par une technique d'analyse discriminante non paramétrique où les paramètres suivent une loi expérimentale par intervalles estimée.

**4.** Méthode selon la revendication 3, **caractérisée en ce que** l'on estime la loi expérimentale par une technique de noyaux.

**5.** Méthode selon l'une des revendications 1 à 4, **caractérisée en ce que :**

- ledit ensemble de p paramètres correspond à des mesures diagraphiques obtenues dans différents puits au travers dudit réservoir pour différentes profondeurs ;
- lesdites données correspondent à des carottes géologiques prélevées dans au moins un puits foré au travers dudit réservoir ; et
- lesdites catégories correspondent à différentes natures de roche.

**6.** Méthode selon l'une des revendications 1 à 4, **caractérisée en ce que :**

- ledit ensemble de p paramètres correspond à de traces sismiques obtenues par exploration sismique dudit réservoir ;
- lesdites données correspondent à des traces prélevées dans un voisinage d'au moins un puits foré au travers dudit réservoir ; et
- lesdites catégories correspondent à différentes natures de réservoirs.

**Claims**

**1.** A method of recognising an oil reservoir by recognising geological objects within said reservoir, said objects being described by a group of *p* parameters, in which a discriminant analysis technique is used in order to classify said objects into defined categories, **characterised in that** it comprises the following steps:

- defining said categories by the variables of known statistical characteristics, from data obtained by measurements within said reservoir;
- forming a training set including objects of which the category is known from said data;
- constructing, from the objects and categories defined in said training set, a function which makes it possible to classify said objects in said categories, by means of a discriminant analysis technique in which probability intervals of said objects belonging to the different categories are determined, taking into account uncertainties about said parameters in the form of intervals of variable length; and
- evaluating said probability intervals of said objects, and
- assigning said objects to at least one of said categories depending on the importance of said probability intervals, and their overlap.

**2.** The method according to Claim 1, **characterised in that** the said classification function is constructed using a parametric discriminant analysis technique in which the parameters follow an interval-based multi-Gaussian probability law.

**3.** The method according to Claim 1, **characterised in that** said classification function is constructed using a non-parametric discriminant analysis technique in which the parameters follow an estimated interval-based experimental law.

**4.** The method according to Claim 3, **characterised in that** the experimental law is estimated using a kernel technique.

**5.** The method according to one of Claims 1 to 4, **characterised in that:**

- said group of p parameters corresponds to diagraphic measurements obtained in various wells through said reservoir for different depths;
- said data corresponds to geological drilling cores sampled in at least one well drilled through said reservoir; and
- said categories correspond to different types of rock.

6. The method according to one of claims 1 to 4, **characterised in that:**

   - said group of p parameters corresponds to seismic traces obtained by means of seismic exploration of said reservoir;
   - said data corresponds to traces sampled in the vicinity of at least one well drilled through said reservoir; and
   - said categories correspond to different types of reservoirs.


**Patentansprüche**

1. Verfahren zur Erkennung eines Ölvorkommens durch Erkennung geologischer Objekte im Inneren des Vorkommens, wobei die Objekte durch eine Gesamtheit von p Parametern beschrieben sind, wobei eine Methode der Diskriminantenanalyse verwendet wird, um die Objekte in definierte Kategorien zu klassifizieren, **dadurch gekennzeichnet, dass** es die folgenden Schritte umfasst:

   - das Definieren der Kategorien mittels Variabler von bekannten statistischen Merkmalen, ausgehend von Daten, die durch Messungen im Inneren des Vorkommens erhalten wurden;
   - das Bilden einer Lernbasis, die die Objekte umfasst, deren Kategorie ausgehend von den Daten bekannt ist;
   - das anschließende Erzeugen, ausgehend von den Objekten und den Kategorien, die in der Lernbasis definiert sind, einer Funktion, die die Klassifizierung der Objekte in die Kategorien zulässt, und zwar mittels einer Methode der Diskriminantenanalyse, wobei Wahrscheinlichkeitsintervalle der Zugehörigkeit der Objekte zu den verschiedenen Kategorien bestimmt wird, wobei Unsicherheiten über die Parameter in Form von Intervallen mit variabler Länge berücksichtigt sind; und
   - das Bewerten der Wahrscheinlichkeitsintervalle der Objekte; und
   - das Zuordnen der Objekte zu mindestens einer der Kategorien in Abhängigkeit des Ausmaßes der Wahrscheinlichkeitsintervalle und ihrer Überlappung.

2. Verfahren nach Anspruch 1, **dadurch gekennzeichnet, dass** die Klassifizierungsfunktion durch eine Methode der parametrischen Diskriminantenanalyse erzeugt wird, bei der die Parameter einem multiplen Gauß-Wahrscheinlichkeitsgesetz durch Intervalle folgen.

3. Verfahren nach Anspruch 1, **dadurch gekennzeichnet, dass** die Klassifizierungsfunktion durch eine Methode der nicht-parametrischen Diskriminantenanalyse erzeugt wird, bei der die Parameter einem Versuchsgesetz durch geschätzte Intervalle folgen.

4. Verfahren nach Anspruch 3, **dadurch gekennzeichnet, dass** das Versuchsgesetz durch eine Methode der Kerndichteschätzung geschätzt wird.

5. Verfahren nach einem der Ansprüche 1 bis 4, **dadurch gekennzeichnet, dass:**

   - die Gesamtheit von p Parametern diagraphischen Messungen entspricht, die in verschiedenen Schächten, die durch das Vorkommen verlaufen, für verschiedene Tiefen erhalten wurden;
   - die Daten geologischen Bohrkernen entsprechen, die aus mindestens einem Schacht gezogen wurden, der durch das Vorkommen gebohrt wurde; und
   - die Kategorien verschiedenen Arten von Gestein entsprechen.

6. Verfahren nach einem der Ansprüche 1 bis 4, **dadurch gekennzeichnet, dass:**

   - die Gesamtheit von p Parametern seismischen Spuren entspricht, die durch die seismische Erkundung des Vorkommens erhalten wurden;
   - die Daten Spuren entsprechen, die aus einer Umgebung von mindestens einem Schacht entnommen wurden, der durch das Vorkommen gebohrt wurde; und
   - die Kategorien verschiedenen Arten von Vorkommen entsprechen.

Fig.1a        Fig.1b        Fig.1c

**Fig.2**

**Fig.3**

a        b

1 : Argiles marines

2 : Argiles silteuses

3 : Grès I

4 : Grès II

5 : Grès III

6 : Grès micacé

P(m)

**Fig.4a**       **Fig.4b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2768818

- US 6052651 A

**Littérature non-brevet citée dans la description**

- Introduction to Interval Computations. **ALEFELD G. ; HERZBERGER J.** Computer Science and Applied Mathematics. Academic Press, 1983
- Integrated Stratigraphic and Lithologic Interpretation of The East-Senlac Heavy Oil-Pool. **DEQUIREZ P. Y. ; FOURNIER F. ; FEUCHTWANGER T. ; TORRIERO D.** SEG, 65th Annual International Society of Exploration Geophysicists Meeting. 08 Octobre 1995, 104-107
- **EPANECHNIKOV V. A.** Nonparametric Estimate of a Multivariate Probability. *Density: Theor. Probab. Appl.,* 1969, vol. 14, 179-188
- Discrimination and Classification. **HAND D. J.** Probabilities and Mathematical Statistics. John Wiley & Sons, 1981
- **JAULIN L.** Le Calcul Ensembliste par Analyse par Intervalles et Ses Applications. *Mémoire d'Habilitation à Diriger des Recherches,* 2000
- **KOLMOGOROV A. N.** Foundation of the Theory of Probability. Chelsea Publ. Co, 1950
- Optimization by Vector Space Methods. **LUENBERGER D. G.** Decision and Control. John Wiley & Sons, 1969

- **MOORE R. E.** Interval Analysis. Prenctice-Hall, 1969
- **PAVEC R.** Some Algorithms Providing Rigourous Bounds for the Eigenvalues of a Matrix. *Journal of Universal Computer Science,* vol. 1 (7), 548-559
- Statistical Reasoning with Imprecise Probabilities. **WALLEY P.** Monographs on Statistics and Applied Probabilities. Chapman and Hall, 1991
- **H. KIM ; P.H. SWAIN.** Evidential reasoning approach to multisource-data classification in remote sensing. *IEEE Transactions on Systems, Man and Cybernetics,* Août 1995, vol. 25 (8), 1257-1265
- **F. FOURNIER.** Integration of 3D seismic data in reservoir stochastic simulations: A case study. *SPE Annual technical conference and exhibition,* 1995
- **F. FOURNIER ; J. F. DERAIN.** A statistical methodology for deriving reservoir properties from seismic data. *Geophysics,* Septembre 1995, vol. 60 (5), 1437-1450